# EUROPEAN PATENT APPLICATION

(11) **EP 4 603 164 A1**
(43) Date of publication of application: **20.08.2025**
(21) Application number: 25158031.2
(22) Date of filing: 14.02.2025
(51) Int. Cl.: A63F 13/798, A63F 13/46, A63F 13/58, A63F 13/69, A63F 13/822

(54) **PROGRAM, GAME DEVICE, AND PROVISION MANAGEMENT DEVICE**

(30) Priority: 19.02.2024 JP 2024023272
(71) Applicant: Bandai Co., Ltd., Tokyo 111-8081 (JP)
(72) Inventor: TAKEDA, Satoshi, Tokyo, 111-8081 (JP); SAITO, Masahiko, Tokyo, 111-8081 (JP); MITA, Kensuke, Tokyo, 111-8081 (JP)
(74) Representative: Studio Torta S.p.A.

(57) **Abstract**

A highly enjoyable game is provided. A program causes a computer to function as: a battle game execution unit that executes a battle game; and a giving unit that gives one of a first-type game element and a second-type game element as a reward for the battle game. The giving unit is capable of successively giving the first-type game element, and does not successively give the second-type game element.

## Description

### BACKGROUND OF THE INVENTION

### 1. Field of the Invention

The present invention relates to a program, a game device, and a provision management device.

### 2. Description of the Related Art

There is a technique to give a player a reward that the player feels has a merit, in order to cause the player to continuously execute a game (Japanese Unexamined Patent Application Publication No. 2021-62197, for example).

### SUMMARY OF THE INVENTION

In a battle game such as that described above, it is important to provide a highly enjoyable game that continuously interests players.

Thus, the present invention addresses providing a highly enjoyable program, game device, and provision management device.

An aspect of the present invention provides a program that causes a computer to function as: a battle game execution unit that executes a battle game; and a giving unit that gives one of a first-type game element and a second-type game element as a reward for the battle game, in which the giving unit is capable of successively giving the first-type game element, and does not successively give the second-type game element.

An aspect of the present invention provides a game device including: a battle game execution unit that executes a battle game; and a giving unit that gives one of a first-type game element and a second-type game element as a reward for the battle game, in which the giving unit is capable of successively giving the first-type game element, and does not successively give the second-type game element.

An aspect of the present invention provides a program that causes a computer to function as: a battle game management unit that manages progress of a battle game of a player; and a provision unit that provides one of a first-type game element and a second-type game element as a reward for a result of the progress of the battle game of the player, in which the provision unit is capable of successively providing the first-type game element, and does not successively provide the second-type game element.

An aspect of the present invention provides a provision management device including: a battle game management unit that manages progress of a battle game of a player; and a provision unit that provides one of a first-type game element and a second-type game element as a reward for a result of the progress of the battle game of the player, in which the provision unit is capable of successively providing the first-type game element, and does not successively provide the second-type game element.

According to the present invention, it is possible to provide a highly enjoyable game.

### BRIEF DESCRIPTION OF THE DRAWINGS

Fig. 1 illustrates an example of the overall configuration of a game system according to the present embodiment;
Fig. 2 illustrates an example of the device configuration of a notebook computer as an example of a player terminal;
Fig. 3 illustrates an example of the front surface of a leader card;
Fig. 4 illustrates an example of the back surface of the leader card;
Fig. 5 illustrates an example of the front surface of a battle card;
Fig. 6 illustrates an example of the back surface of the battle card;
Fig. 7 illustrates an example of the front surface of an extra card;
Fig. 8 illustrates an example of a profile card;
Fig. 9 is a block diagram illustrating an example of the functional configuration of the player terminal;
Fig. 10 illustrates an example of a player information database;
Fig. 11 illustrates an example of a game element database;
Fig. 12 illustrates an example of a title database;
Fig. 13 illustrates an example of a reward database;
Fig. 14 illustrates an example of a player image part list;
Fig. 15 illustrates an example of profile card information;
Fig. 16 illustrates an example of a home screen;
Fig. 17 illustrates an example of a profile screen;
Fig. 18 illustrates an example of the profile screen;
Fig. 19 illustrates an example of a mission screen;
Fig. 20 is a block diagram illustrating an example of the functional configuration of a game server;
Fig. 21 illustrates an example of a player information management database;
Fig. 22 illustrates an example of a profile card management database;

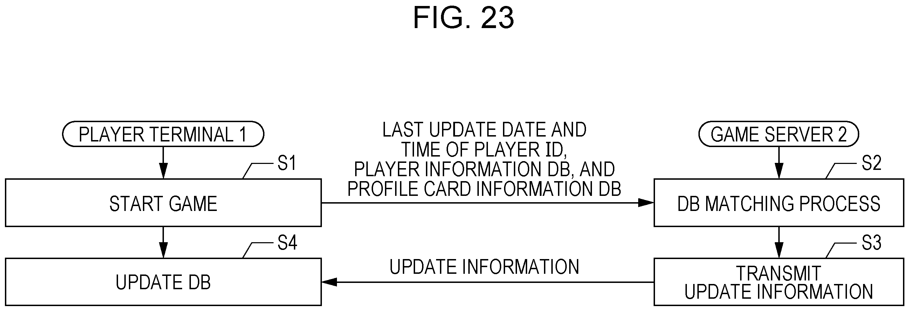

Fig. 23 is a sequence diagram illustrating operation of the player terminal and the game server; and
Fig. 24 illustrates operation to give a reward.

### DESCRIPTION OF THE PREFERRED EMBODIMENTS

Embodiments of the present invention will be described.

### Overall Configuration

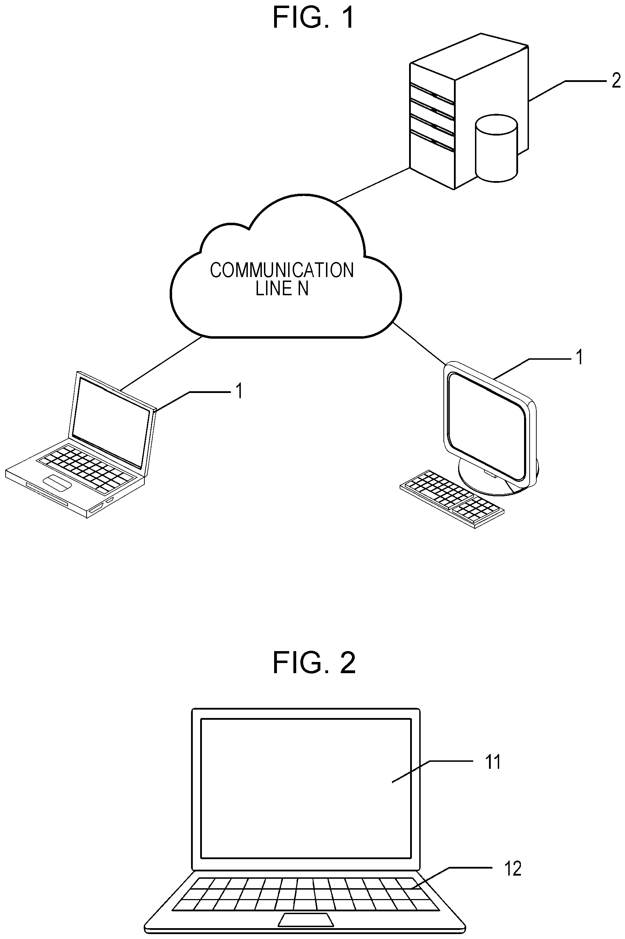

Fig. 1 illustrates an example of the overall configuration of a game system according to the present embodiment. As illustrated in Fig. 1, the game system is configured to include a player terminal 1 prepared for each of players A and B of a game, and a game server 2. The player terminals 1 and the game server 2 are connectable to a communication line N, and communicable with each other.

The communication line N means a communication path that enables data communication. That is, the communication line N includes a communication network such as a telephone communication network, a cable network, and the Internet, besides a local area network (LAN) through a dedicated line (dedicated cable) for direct connection or an Ethernet (registered trademark), and the communication method may be either wired or wireless.

The player terminals 1 are computers capable of executing a game program, and are connectable to the communication line N via a wireless communication base station, etc., and capable of performing data communication with the game server 2. Examples of the player terminals 1 include a personal computer, a smartphone, a cellular phone, a portable game device, a stationary home-use game device, a commercial game device, a tablet computer, a controller for a stationary home-use game device, etc. Basically, there are a plurality of player terminals 1 to be operated by different players.

The game server 2 is a server system configured to include a single or a plurality of server devices, storage devices, etc. The game server 2 provides various services for administering a game according to the present embodiment, and may manage data required to administer the game, distributing a game program and data required to execute the game on the player terminals 1, etc.

Fig. 2 illustrates an example of the device configuration of a notebook computer as an example of the player terminal 1. As illustrated in Fig. 2, the player terminal 1 includes a display 11 and a keyboard 12 as an operation unit. The player terminal 1 is also provided with a control board, a built-in battery, a power button, a volume adjustment button, a speaker, etc. (not illustrated).

The control board includes, as mounted thereon, various microprocessors such as a central processing unit (CPU), a graphics processing unit (GPU), and a digital signal processor (DSP), an application specific integrated circuit (ASIC), various integrated circuit (IC) memories such as a video random access memory (VRAM), a random access memory (RAM), and a read only memory (ROM), a wireless communication module for wireless communication with a cellular phone base station, etc. The control board also includes, as mounted thereon, a so-called interface circuit (I/F circuit) such as a driver circuit for a touch operation panel 12. These elements mounted on the control board are electrically connected via a bus circuit, etc., to be able to read and write data and transmit and receive signals.

A plurality of types of game elements appear in the game according to the present embodiment. The game elements will be described below.

### First-type Game Element

A first-type game element is an object transformed from a character, and is expressed through an image. The image includes a still image and a moving image. The object may be either intangible or tangible. Examples include a virtual game card displayed on the computer, a substantive game card, etc. The object is not limited to a card as long as a game element correlated with the object can be specified. The object may be a shaped article such as a figure that has the appearance of the game element, for example. In the following description, the first-type game element will be described as a virtual game card transformed from a character, for example.

In the game according to the present embodiment, there are a plurality of types of game cards as the first-type game element. Different information is written on the front surface of the game card, depending on the type of the game card. There may be any number of types of game cards. In the following description, there are three types of game cards, including a leader card 21 (first game element of first type), a battle card 22 (second game element of first type), and an extra card 23 (third game element of first type). The common feature of all the types of game cards is that the game cards are correlated with a character image of a work. The character image is an image of a character that appears in the work. In the present embodiment, an image of a scene including a character that appears in the work is also referred to as the character image. There are a plurality of game cards with different pictures of the same character, and such game cards are treated as different game cards.

A player executes a game by constructing a deck in advance using acquired game cards and placing a game card in a play area. When constructing a deck, the total number of cards of a deck and the number of cards of each type are determined in advance. In the present embodiment, a deck includes a total of 50 cards, including one leader card 21, for example. However, a deck may include any number of cards determined in advance.

The game cards have a regular position. A game card is in the regular position when the player can recognize the content written on the game card as it is. The game cards have a plurality of arrangement states. In the following description, the state in which a game card is in the regular position will be referred to as an "active state", and the state in which a game card is rotated by 90 degrees to be oriented horizontally will be referred to as a "rest state". In addition, the state in which a game card is rotated by 180 degrees to be in an inverted position in a predetermined area (energy area) within the play area will be referred to as an "active state". A predetermined orientation may be determined in advance as an "active state", and a state in which the orientation of the game card has been changed from the predetermined orientation may be determined as a "rest state".

### Leader Card 21

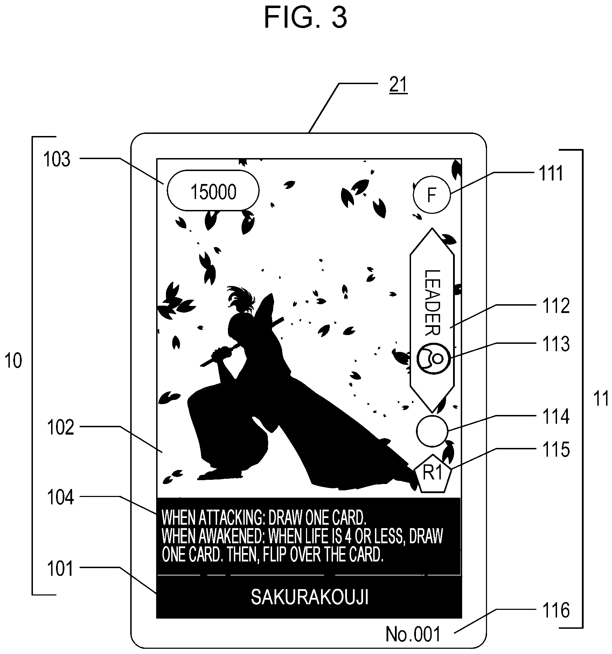

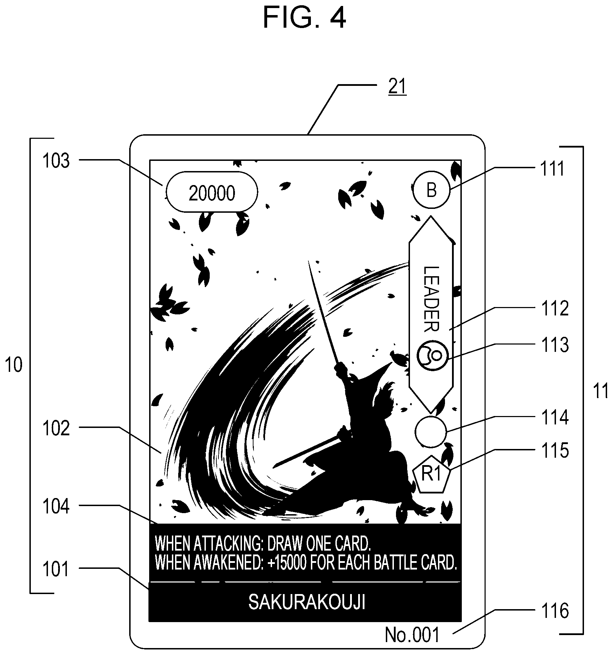

The leader card 21 (first game element of first type) will be described. Figs. 3 and 4 each illustrate an example of the leader card 21. Fig. 3 illustrates an example of the front surface of the leader card 21. Fig. 4 illustrates an example of the back surface of the leader card 21. One leader card 21 is included in a deck. The leader card 21 is a game card that is used to battle against a leader card 21 or a battle card 22 of an opponent.

Character information 10 and card information 11 are written on each of the front surface and the back surface of the leader card 21. The leader card 21 is placed such that the front surface is seeable at the start of the game, but is placed such that the back surface is seeable when a predetermined condition is met.

The leader card 21 includes the character information 10 and the card information 11, and the character information 10 includes a character name 101, a character image 102, power information 103, and effect information 104.

The character name 101 is the name of a character correlated with the card. In the examples illustrated in Figs. 3 and 4, the name "Sakurakouji" is written.

The character image 102 is an image of the character correlated with the card.

The ability information 103 is a parameter of the ability of the character correlated with the game card. In the present embodiment, a power value of the character is written as the ability information. The player wins when the power value is greater than the power value of the battle card 22 of the opponent. A power value of "15000" is written in the example in Fig. 3, and a power value of "20000" is written in the example in Fig. 4.

The effect information 104 indicates skill information about the effect caused when attacking, and awakening information about the condition for flipping from the front surface to the back surface and the effect. In the example in Fig. 3, the skill information indicates "When attacking: draw one card", the awakening information indicates "When life is 4 or less, draw one card. Then, flip over the card".

While the ability information 103 and the effect information 104 may be included in the character information 10, the ability information 103 and the effect information 104 are not included in the character information in the present description.

The card information 11 includes front-back information 111, a card type name 112, a card type symbol 113, color information 114, rarity 115, and card identification information 116.

The front-back information 111 clearly indicates the front and the back of the leader card 21. The front-back information 111 may be any information that indicates the front and the back such as a text string, an illustration, a symbol mark, etc. In the example illustrated in Fig. 3, the letter "F" is used as the front-back information to indicate the front surface. In the example illustrated in Fig. 4, the letter "B" is used as the front-back information to indicate the back surface. The front-back information may be provided at least on the back surface. This is because importance is placed on the appearance of game cards themselves of card games and it is preferred if there is no extra information on the front surface.

The card type name 112 indicates the type of the card. The card type name 112 indicates information that indicates one of the leader card, the battle card, and the extra card. In the examples of the leader card 21 illustrated in Figs. 3 and 4, "Leader" is written as the card type name 112.

The card type symbol 113 indicates a symbol that distinctively denotes one of the leader card 21, the battle card 22, and the extra card 23. A leader symbol that indicates the leader card is indicated on the leader card 21. The leader symbol (first symbol) is preferably a symbol that suggests the role of the leader card 21, in order to allow visually recognizing the leader card.

The color information 114 indicates the color to which the card belongs. The player references the color information 114 of the leader card 21, and constructs a deck using battle cards 22 and extra cards 23 with the same color information.

The rarity 115 indicates the rarity level of the game card 2. The rarity level may be displayed by any method set in advance. In the present embodiment, there are five stages of rarity. In the examples illustrated in Figs. 3 and 4, the rarity level is 1.

The card identification information 116 indicates identification information that uniquely identifies the game card 2. In the examples in Figs. 3 and 4, the card identification information 116 indicates "001".

The card type symbol 113 (leader symbol) and the ability information 103 or the effect information 104 are written on the front and the back of the leader card 21, unlike the other game cards. The ability information 103 or the effect information 104 is different between the front and the back. This makes it possible to express evolution or awakening of a single character using a single card, and to recognize that the card is a leader card on the basis of the indication on the front and the back.

### Battle Card 22

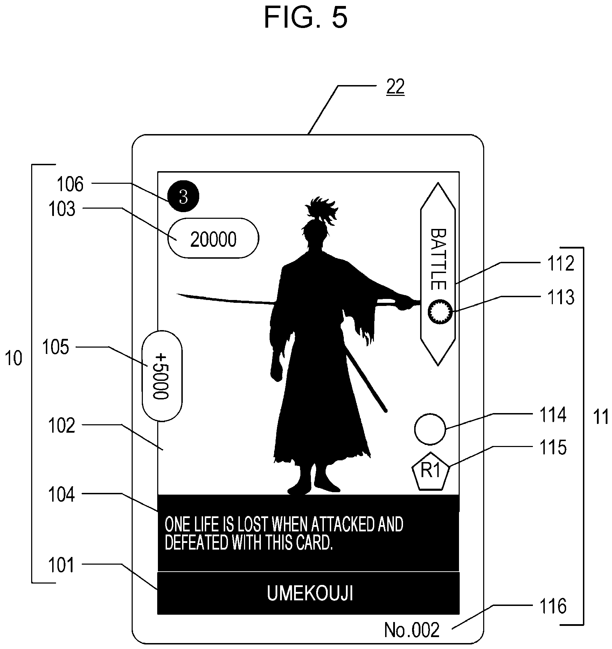

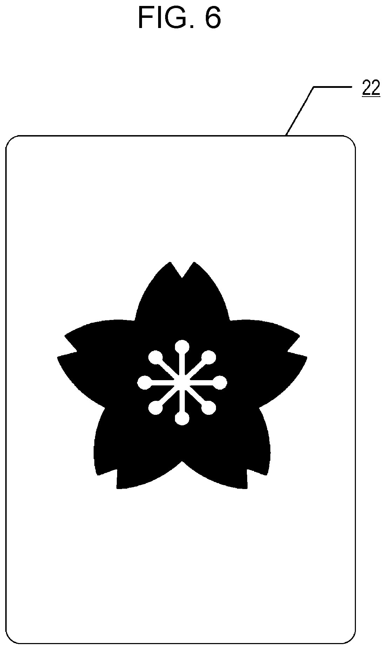

The battle card 22 (second game element of first type) will be described. Fig. 5 illustrates an example of the front surface of the battle card 22. Fig. 6 illustrates an example of the back surface of the battle card 22. As illustrated in Fig. 5, an image of a correlated character is indicated only on the front surface of the battle card 22. All the battle cards 22 have the same back surface. The battle card 22 is used to attack the leader card 21 or the battle card 22 of the opponent player. The battle card 22 can be placed in a battle area of the play area.

The battle card 22 includes the character information 10 and the card information 11. The character information 10 includes the character name 101, the character image 102, the power information 103, and the effect information 104, as with the leader card 21. The character information 10 further includes combo information 105 and cost information 106.

The character name 101 is the name of a character correlated with the card, as with the leader card 21. In the example illustrated in Fig. 5, the name "Umekouji" is written.

The character image 102 is an image of the character correlated with the card, as with the leader card 21.

The ability information 103 is a parameter of the ability of the character correlated with the game card, as with the leader card 21. A power value of "20000" is written in the example in Fig. 5. The effect information 104 indicates skill information about the effect caused when attacking. In the example in Fig. 5, the skill information indicates "One life is lost when attacked and defeated with this card".

The combo information 105 is information about the power value exhibited when the card is placed in a combo area of the play area. In the examples in Fig. 5, the combo information 105 indicates "+5000".

The cost information 106 is information on the cost required to place the battle card 22 in the battle area of the play area from the hand. That is, the battle card 22 can be placed in the battle area of the play area by changing a number of game cards 2 disposed in the energy area of the play area from the active state to the rest state, the number corresponding to the numerical value indicated in the cost information 106. In the example in Fig. 5, the cost information 106 indicates "3". In the following description, changing the game cards 2 disposed in the energy area of the play area from the active state to the rest state will be referred to as "paying the cost".

The card information 11 includes the card type name 112, the card type symbol 113, the color information 114, the rarity 115, and the card identification information 116.

The card type name 112 indicates the type of the card. In the example of the battle card 22 illustrated in Fig. 5, "Battle" is written as the card type name 112.

A battle symbol (second symbol) that indicates the battle card 22 is indicated as the card type symbol 113. The battle symbol is preferably a symbol that suggests the role of the battle card 22, in order to allow visually recognizing the battle card.

The color information 114 indicates the color to which the card belongs. The player references the color information 114 of the leader card 21, and constructs a deck using battle cards 22 and extra cards 23 with the same color information.

The rarity 115 indicates the rarity level of the game card 2. In the example illustrated in Fig 5, the rarity level is 1.

The card identification information 116 indicates identification information that uniquely identifies the game card 2. In the example in Figs. 5, the card identification information 116 indicates "002".

### Extra Card

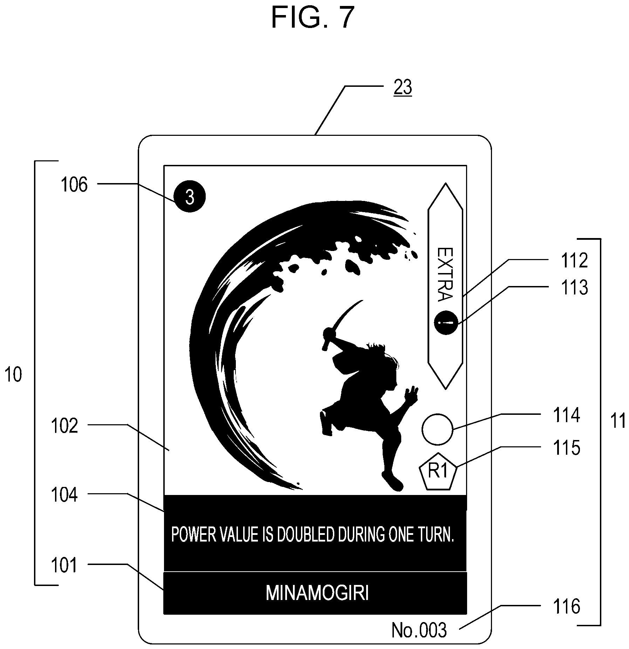

The extra card 23 (third game element of first type) will be described. Fig. 7 illustrates an example of the front surface of the extra card 23. As illustrated in Fig. 7, an image of a correlated character is indicated on the front surface of the extra card 23.

The back surface of the extra card 23 is the same as that of the battle cards 22. That is, the back surface of the extra card 23 is the same as that of the battle cards 22 illustrated in Fig. 6.

The extra card 23 includes the character information 10 and the card information 11.

The character information 10 includes the character name 101, the character image 102, the effect information 104, and the cost information 106.

The character name 101 is the name of a character correlated with the card. In the case of the extra card 23, the name of a characteristic scene, sight, landscape, background, building, property of the character, event, etc., that appears in the work is indicated. In the example in Fig. 7, the name "Minamogiri" is written.

The character image 102 is an image of the character correlated with the card, and an image in which a characteristic scene, sight, landscape, background, building, property of the character, event, etc., that appears in the work is expressed together with the character.

The effect information 104 indicates skill information about the effect caused when attacking. In the example in Fig. 7, the skill information indicates "Power value is doubled during one turn".

The cost information 106 is information on the cost required to place the extra card 23 in the battle area of the play area from the hand. In the example in Fig. 7, the cost information 106 indicates "3".

The card information 11 includes the card type name 112, the card type symbol 113, the color information 114, the rarity 115, and the card identification information 116.

The card type name 112 indicates the type of the card. In the example of the extra card 23 illustrated in Fig. 7, "Extra" is written as the card type name 112.

An extra symbol (third symbol) that indicates the extra card 23 is indicated as the card type symbol 113. The extra symbol is preferably a symbol that suggests the role of the extra card 23, in order to allow visually recognizing the extra card.

The color information 114 indicates the color to which the card belongs. The player references the color information 114 of the leader card 21, and constructs a deck using battle cards 22 and extra cards 23 with the same color information.

The rarity 115 indicates the rarity level of the game card 2. In the example illustrated in Fig 7, the rarity level is 1.

The card identification information 116 indicates identification information that uniquely identifies the game card 2. In the example in Figs. 7, the card identification information 116 indicates "003".

### Second-type Game Element

A second-type game element will be described.

The second-type game element according to the present embodiment is a game element to be used in transactions within the game, and is referred to as "in-game currency". The second-type game element includes a paid second-type game element (first game element of second type) that may be acquired by the player paying a charge, and a complimentary second-type game element (second game element of second type) that is given from the game administration side. The payed second-type game element (first game element of second type) and the complimentary second-type game element (second game element of second type) are mainly used to be exchanged with (purchase) the first-type game element (game cards), etc., discussed above. In the following description, the payed second-type game element (first game element of second type) will be referred to as "payed currency", and the complimentary second-type game element (second game element of second type) will be referred to as "complimentary currency".

### Third-type Game Element

A third-type game element will be described.

The third-type game element according to the present embodiment is an object given by clearing a predetermined mission, and is not exchangeable with the paid currency or the complimentary currency. The third-type game element is expressed through an image. The image includes a still image and a moving image. The object may be either intangible or tangible. Examples include a virtual badge displayed on the computer, a substantive badge, etc. The object is not limited to a badge as long as a third-type game element correlated with the object can be specified. The object may be a shaped article such as a figure or a sticker that has the appearance of the third-type game element, for example. In the following description, the third-type game element will be described as a virtual badge transformed from a badge, for example. The badge will be specifically discussed later.

### Fourth-type Game Element

A fourth-type game element will be described.

The fourth-type game element according to the present embodiment is an object transformed from the player, and is expressed through an image. The image includes a still image and a moving image. The object may be either intangible or tangible. Examples include a virtual card displayed on the computer, a substantive game card, etc. The object is not limited to a card as long as a fourth-type game element correlated with the object can be specified. The object may be a shaped article such as a figure that has the appearance of the fourth-type game element, for example. In the following description, the fourth-type game element will be described as a virtual card transformed from the player, for example, and referred to as a "profile card". One profile card is given to each player at the start of the game, and displayed as an avatar of the player during a battle game, etc.

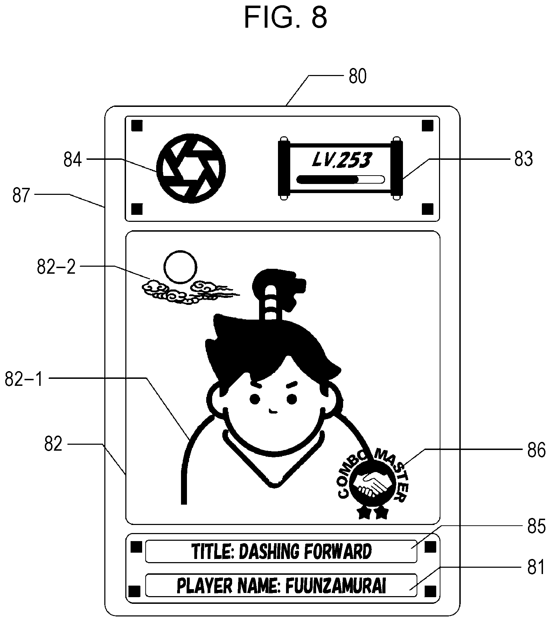

Fig. 8 illustrates an example of the profile card. The profile card 80 includes a player name 81, a player image (including a still image and a moving image) 82, level information 83, rank information 84, title information 85, badge information 86, and frame information 87 of the player.

The player name 81 is a nickname of the player, for example. The player name may be set as desired by the player.

The player image 82 includes a character image 82-1 and a background image 82-2. The character image 82-1 is an image of a character set by the player. As the character image 82-1, a default character is given to all the players when the profile card is given, and a part obtained as a reward for the game or by paying a charge may be set in substitution or in addition. The background image 82-2 is an image of the background of the character. As with the character part, a default background image is given when the profile card is given, and a plurality of background images may be obtained as a reward for the game or by paying a charge. The background image 82-2 may be set by the player.

The level information 83 indicates the level of the player obtained by accumulating experience points since the start of the game.

The rank information 84 is information on ranking obtained when the game is executed in a rank match mode, among a plurality of types of game modes. In the present embodiment, the rank match indicates a game in which the player competes with other players for places during a period set by the host (game official) of the game. The rank information may indicate a place in the ranking, or may indicate a predetermined mark set for each ranking. In the following description, the rank information indicates a mark, for example.

The title information 85 is a title (at least one of a name or an image of the title) given when a title giving condition is met, and is displayed by selecting one of titles that the player desires to display, from among titles given by a title giving control section 63 to be discussed later.

The badge information 86 indicates an image of a badge as one of rewards given when a predetermined mission is achieved. The badge information 86 indicates a badge image corresponding to a badge selected by the player as one that the player desires to display (as superimposed) on the profile card, from among badges given by a reward giving control section 64 to be discussed later, and varies the appearance of the profile card. No badge information 86 is displayed when no badge has been given or is selected by the player. The badge information 86 may indicate a plurality of badges.

The frame information 87 is the frame of the profile card, and may be set using a frame obtained as a reward for executing the game or by paying a charge.

### Configuration of Terminal 1

Next, the configuration of the devices will be described.

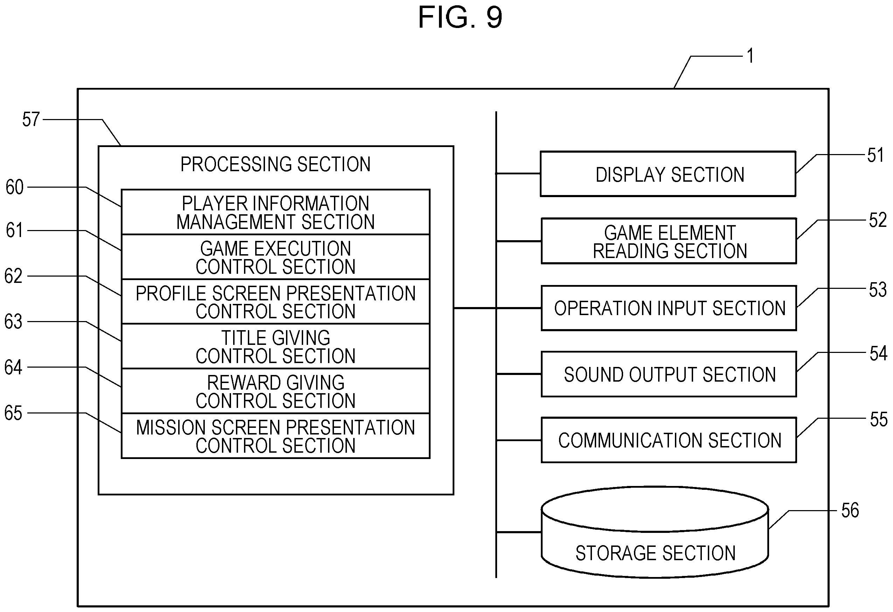

Fig. 9 is a block diagram illustrating an example of the functional configuration of the player terminal 1.

The terminal 1 includes a display section 51, a game element reading section 52, an operation input section 53, a sound output section 54, a communication section 55, a storage section 56, and a processing section 57.

The display section 51 displays various game screens on the basis of an input image signal. The function of the display section 51 may be implemented by a display device such as a flat-panel display such as a liquid crystal, a Braun tube (cathode ray tube), a projector, and a head-mounted display, for example. In the example of the personal computer in Fig. 2, the display section 51 corresponds to the display 11.

The game element reading section 52 is a reader that reads character information to appear in the game from a real game card. The game element reading section 52 may read identification information on a game card, etc., by setting (disposing) a character to appear in a battle game from game cards owned by the player to the game element reading section 52.

The operation input section 53 is used by the player to input various operations related to the game, and outputs an operation input signal matching an operation input to the processing section 57. The function of the operation input section 53 may be implemented by not only an element that is directly operable by the player using a finger such as a keyboard, a mouse, a touch operation pad, a home button, a button switch, a joystick, and a track ball, but also an element that detects motion and a posture such as an acceleration sensor, an angular velocity sensor, an inclination sensor, and a geomagnetic sensor, for example. In the example of the personal computer in Fig. 2, the operation input section 53 corresponds to the keyboard 12.

The sound output section 54 is used to output a sound such as a sound effect related to the game on the basis of an input sound signal.

The communication section 55 is connected to the communication line N to establish communication. The function of the communication section 55 may be implemented by a wireless communication unit, a modem, a terminal adapter (TA), a jack of a communication cable for wired communication, a control circuit, etc.

The storage section 56 stores in advance, or temporarily stores for each processing, a program for causing the terminal 2 to operate and implementing various functions of the terminal 2, data to be used during execution of the program, etc. The storage section 56 may be implemented by a solid state drive that uses an IC memory such as a RAM, a ROM, and a flash memory, a magnetic disk such as a hard disk, an optical disk such as a Compact Disc (CD)-ROM and a Digital Versatile Disc (DVD), etc., for example.

The storage section 56 stores a system program and a game program. The system program is a program for implementing the basic function of the player terminal 1 as a computer. The game program is a program for causing the processing section 57 to exhibit a function to be discussed later. This program is distributed from the game server 2, a different app distribution server, etc., when the player finishes account registration. The storage section 56 also stores databases required to execute the game. In the present embodiment, the storage section 56 stores a player information database D1, a game element database D2, a title list D3, and a reward database D4.

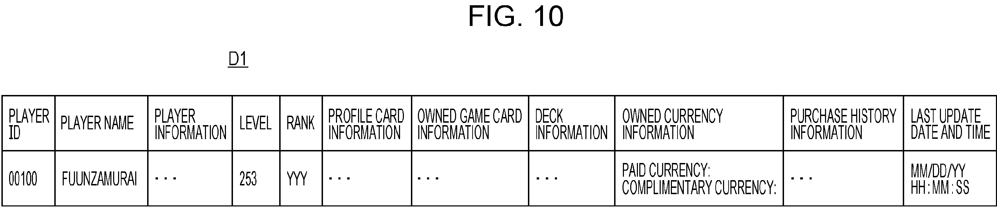

The player information database D1 is a database that stores various kinds of information on the player. Fig. 10 illustrates an example of the player information database D1. The player information database D1 includes a player identifier (ID) field, a player name field, a player information field, a level field, a rank field, a profile card information field, an owned game card information field, a deck information field, an owned currency field, a purchase history information field, and a last update date and time field, and stores various pieces of information as associated with each other.

The player ID field contains identification information for identifying the player. The player name field contains a nickname, for example. The player information field contains experience points, etc., obtained by executing battle games. The level field contains the level of the player obtained by accumulating experience points. The rank field contains the rank of the player obtained by accumulating experience points. The profile card information field contains character image information, background image information, rank information, badge information, and title information set by the player for display on the profile card. The owned game card information contains game card identification information (game card ID) on the game cards owned by the player. The deck information field contains information about the deck constituted from the game cards by the player, and contains the game card IDs of the game cards constituting the deck for each deck. The owned currency information field contains the quantity of the in-game currency owned by the player, and contains the quantity for each of the paid currency and the complimentary currency. The purchase history information field contains the purchase history of the game cards, currency, etc., purchased by the player. The last update date and time field contains the date and time of the last update of the player information database D1.

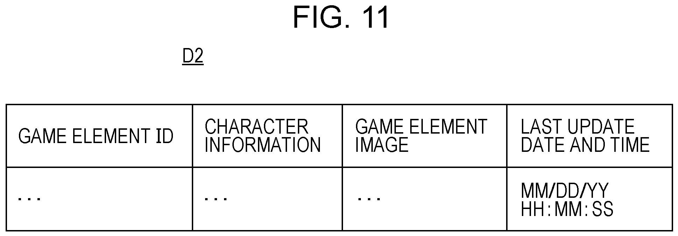

The game element database D2 is a database that stores information on the game cards. Fig. 11 illustrates an example of the game element database D2. The game element database D2 includes a game card ID field, a character information field, and a game card image field, and stores various pieces of information as associated with each other. The game card ID field contains identification information (game card ID) for identifying the game card. The character information field contains character information (e.g., profile information, ability value, etc.) on the character transforming into the game card. The game card image field contains image data on the game card and image data on the character transforming into the game card. The image includes a still image and a moving image.

These databases are successively downloadable from the game server 2 when a character to be used in the game is added, changed, etc.

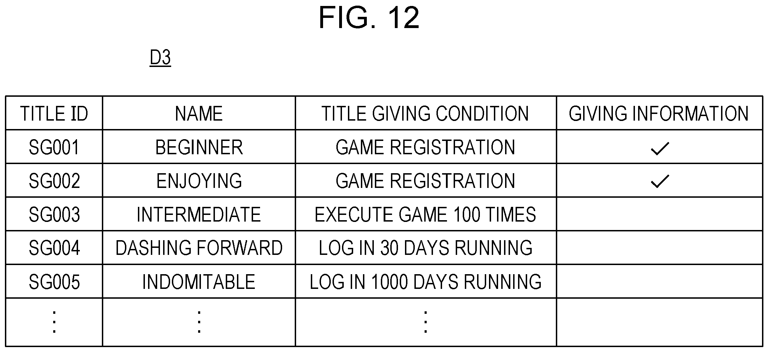

The title database D3 stores information about a title given to the player when a title giving condition is met. Fig. 12 illustrates an example of the title database D3. The title database D3 includes a title ID field, a name field, a giving condition field, and a giving information field.

The title ID field contains identification information for uniquely identifying information on titles. The name field contains the names of the titles. The title giving condition field contains conditions for giving the titles. The giving information field contains whether or not the titles have been given.

Here, the title giving conditions for giving the titles to the player will be described. The title giving conditions preferably have a content that may be met by just executing the game. The name of a title is preferably such a name that allows imagining that the player has met a title giving condition, and further is preferably a name containing information that allows an opponent to roughly grasp the player, that is, information that indicates the state of execution of the game by the player, such as game progress status, log-in status, and play style, for example. In the example in Fig. 12, titles "Beginner" and "Enjoying" are given when a condition of game registration is met, that is, at the start of the game, for example. In this manner, the title information gives information that indicates the state of execution of the game by the player, such as "Beginner" which indicates that the player has just started the game and "Enjoying" which indicates the game style of the player, and the player is enabled to select a desired one of the titles.

When the game is based on an original work, for example, the titles may allow imagining names that appear in the original work or the world view of the original work, which allows fans of the original work, etc., to feel the world view of the original work and improves the enjoyability of the game.

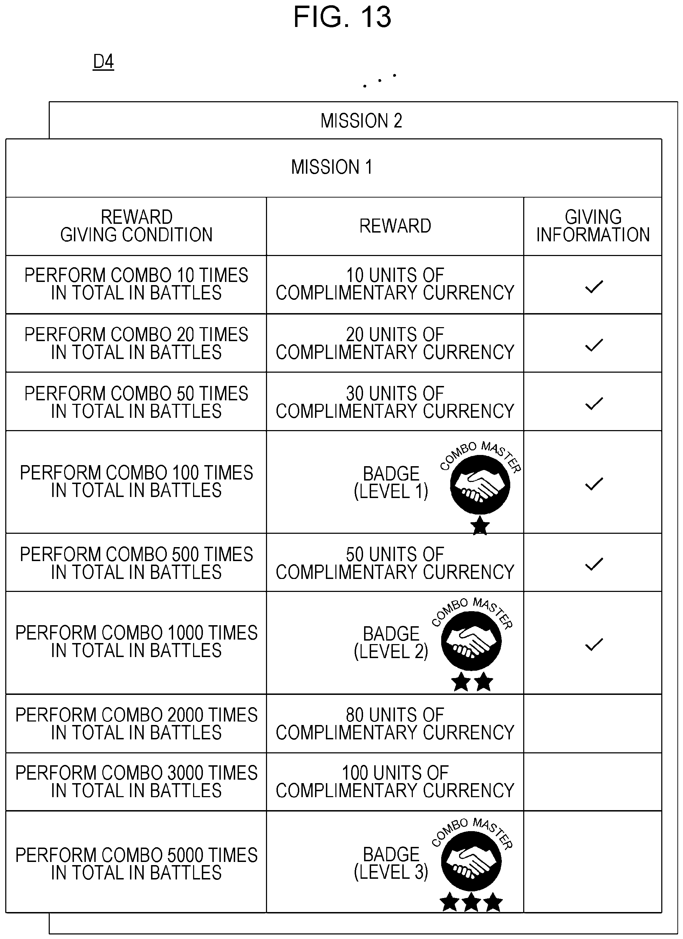

The reward database D4 stores at least one mission that has a plurality of reward giving conditions. Fig. 13 illustrates an example of the reward database D4. The reward database D4 includes a reward giving condition field, a reward field, and a giving information field, and stores various pieces of information as associated with each other. The reward giving condition field contains a condition for giving the reward contained in the reward field. The reward field contains a reward to be given when the reward giving condition is met. The giving information field contains whether or not the reward has been given.

Here, the mission will be described. At least one mission is prepared, and the mission includes reward giving conditions of different degrees of difficulty. The mission preferably has such a content that allows learning the rules of the battle games and the characteristics of the game cards in the battle games. Mission 1 indicated in Fig. 13 is a mission for achieving a combo using the battle card 22 during execution of the battle games. The reward giving conditions have different degrees of difficulty, and are set in the ascending order of the degree of difficulty. In the case of Mission 1, the number of times of achieving a combo is set in the ascending order. That is, the content of the conditions is set to become stricter along with the progress of the game.

The content of rewards for missions according to the present embodiment is the complimentary currency or badges. The content of rewards for missions is set such that the first reward to be given for the same mission is the complimentary currency, the last reward to be given is a badge, and the number of times of giving the complimentary currency is larger than the number of times of giving a badge. The rewards are also set such that the player feels that the rewards have increasing merits as the degree of difficulty of the reward giving condition increases. As indicated in Fig. 13, the complimentary currency as rewards may be given successively for each achievement of a reward giving condition for the same mission. The badges as the other rewards may not be given successively for each achievement of a reward giving condition. In addition, as indicated in Fig. 13, the badges as rewards are set such that a plurality of badges may be given for the same mission, the badges are provided with a rank, and the rank of the badges to be given increases in accordance with the degree of difficulty of the reward giving condition, that is, in accordance with the progress of the game. In the example indicated in Fig. 13, the rank of the badges is expressed by the number of star marks. While badges of different ranks are given each time a reward giving condition is met in the present embodiment, the rank of a badge once given may increase each time a reward giving condition is met.

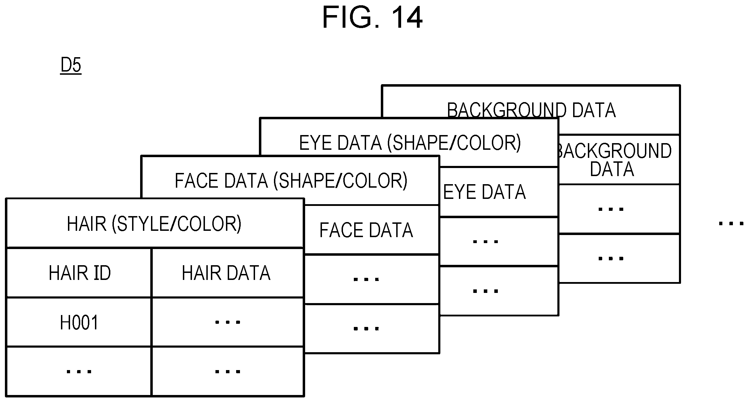

The player image part list D5 is a database that stores information on various parts that constitute the player image. Fig. 14 illustrates an example of the player image part list D5. The player image part list D5 stores a part ID and a part image of each part such as hair (style/color), face (shape/color), eyes (shape/color), and background image as associated with each other.

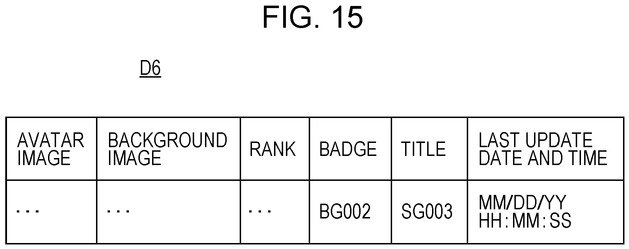

The profile card information D6 is a database that stores profile card information. Fig. 15 illustrates an example of the profile card information D6. The profile card information D6 indicated in Fig. 15 includes a character image field, a background image field, a rank information field, a badge information field, and a title information field, and stores various pieces of information as associated with each other. The character image information field contains data on the character image set by the player. The background image information field contains data on the background image set by the player. The badge information field contains data on the badge image set by the player. The title information field contains data on the title set by the player.

These databases are successively downloadable through the game server 2 when a character to be used in the game is added, changed, etc.

The processing section 57 comprehensively controls operation of the terminal 1 on the basis of the programs and the data stored in the storage section 56, various input signals from the operation input section 53, etc. The function of the processing section 57 may be implemented by electronic components such as a microprocessor such as a CPU and a GPU, an ASIC, and an IC memory, for example. The processing section 57 includes, as main functional sections, a player information management section 60, a game execution control section 61, a profile screen presentation control section 62, a title giving control section 63, a reward giving control section 64, and a mission screen presentation control section 65.

The player information management section 60 manages information on the player using the player information database D1. The player information management section 60 updates the player information database D1 and records the update date and time when there is an update of information on the player such as player ID and player name and information on the game elements such as game cards and in-game currency owned and deck constructed by the player.

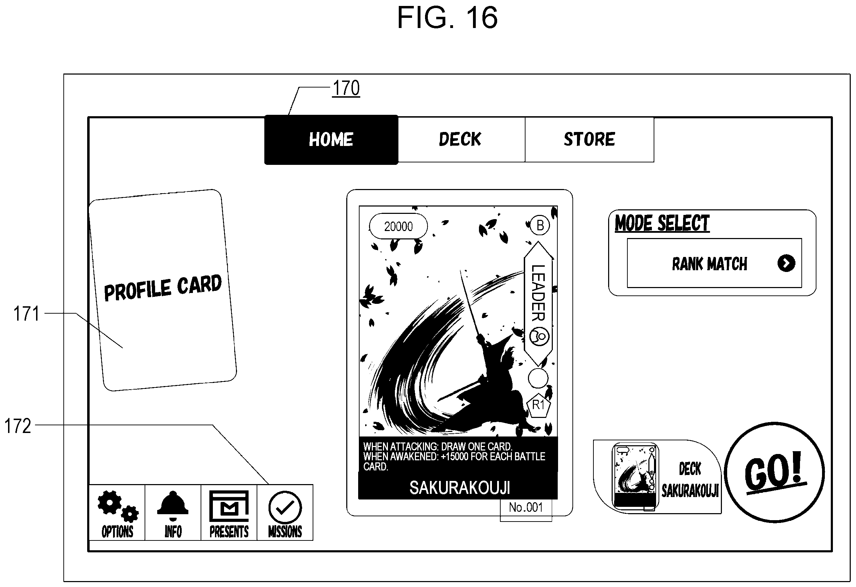

The game execution control section 61 controls and manages the progress of the entire game. For example, the game execution control section 61 displays a menu screen such as a home screen, and executes a process selected by the player. Fig. 16 illustrates an example of a home screen 170. The home screen 170 in Fig. 16 includes a profile card button 171 for a transition to a profile screen 180 and a mission button 172 for a transition to a mission screen 186.

When a battle game is executed between players and the result of the game is determined, the game execution control section 61 updates the player information, level, etc., in the player information database D1 and the rank, etc., in the profile information D6 in accordance with the battle result and the experience points, level, rank, etc., that have varied through the battle.

The profile screen presentation control section 62 displays the profile screen 180 when the profile card button 171 is depressed on the home screen 170. The profile screen presentation control section 62 executes a process selected by the player using the profile screen 180.

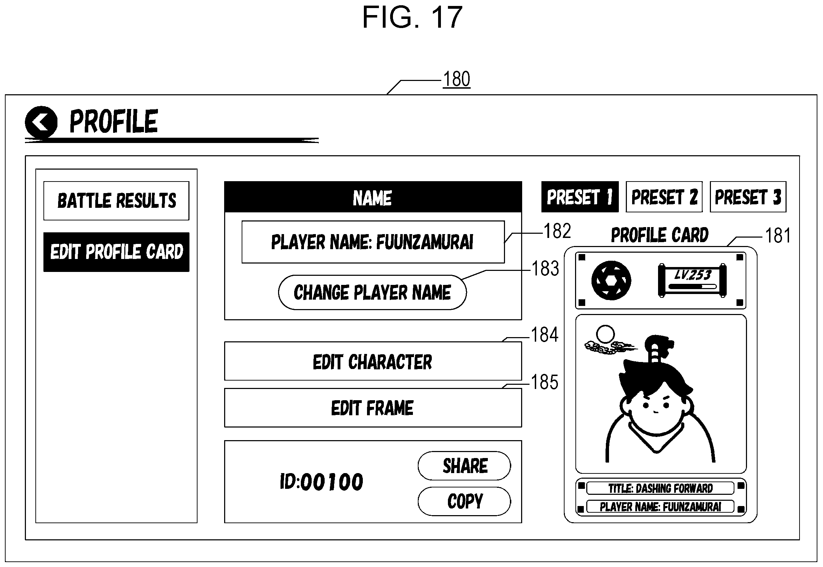

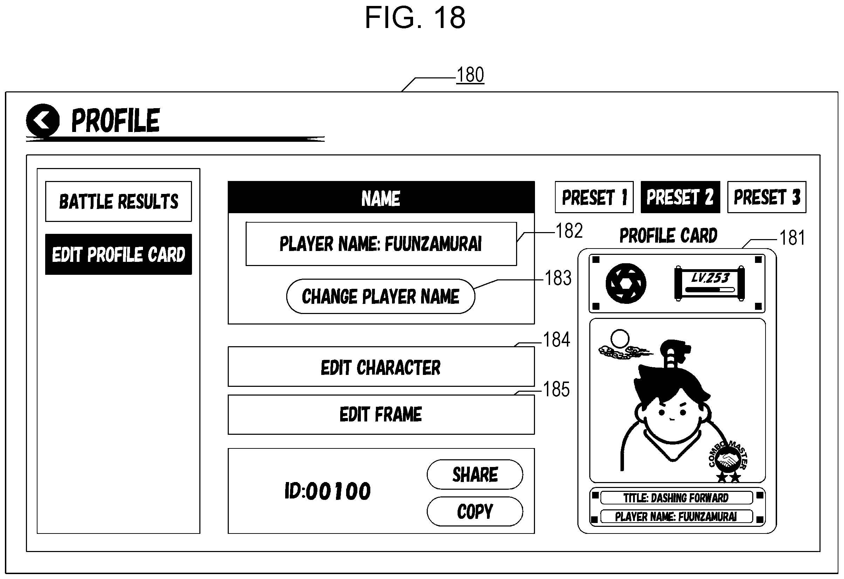

The profile screen presentation control section 62 displays the profile screen 180 on the basis of information from the player information database D1 and the profile card information D6. Figs. 17 and 18 each illustrate an example of the profile screen 180. The profile screen 180 includes a profile card display field 181 in which the profile card illustrated in Fig. 8 is displayed, a player name display field 182 in which information contained in the player name field of the player information database D1 is displayed, a player name change button 183 to be depressed to change the player name, a character edit button 184 to be depressed to set a character image on the profile card, and a frame edit button 185 to be depressed to set a frame. Parts of the character image may be set when the character edit button 184 is depressed. A frame and a badge may be set when the frame edit button 185 is depressed. Fig. 17 illustrates an example displaying a profile card in which no badge is set. Fig. 18 illustrates an example displaying a profile card in which a badge is set.

The title giving control section 63 checks whether the title giving conditions are met during execution of the game, and updates the title database D3 when a title giving condition is met. The reward giving control section 64 checks whether the reward giving conditions are met during execution of the battle game, and gives a reward and updates the reward database D4 when a reward giving condition is met.

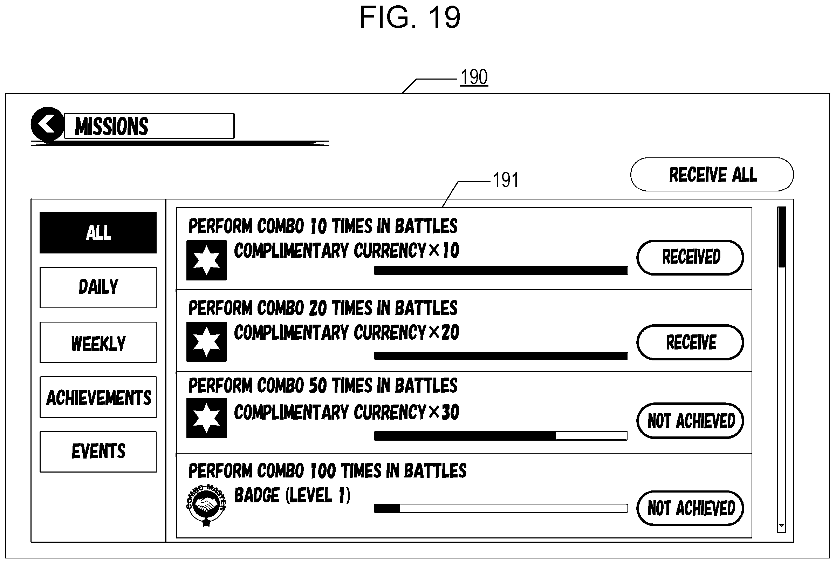

When the mission button 172 is depressed on the home screen 170, the mission screen presentation control section 65 displays a mission screen 190 illustrated in Fig. 19 on the basis of the reward database D4. The mission screen 190 includes a mission information display field 191. As illustrated in Fig. 19, reward giving conditions, the content of the rewards, and giving information are indicated in the mission information display field 191.

### Configuration of Game Server 2

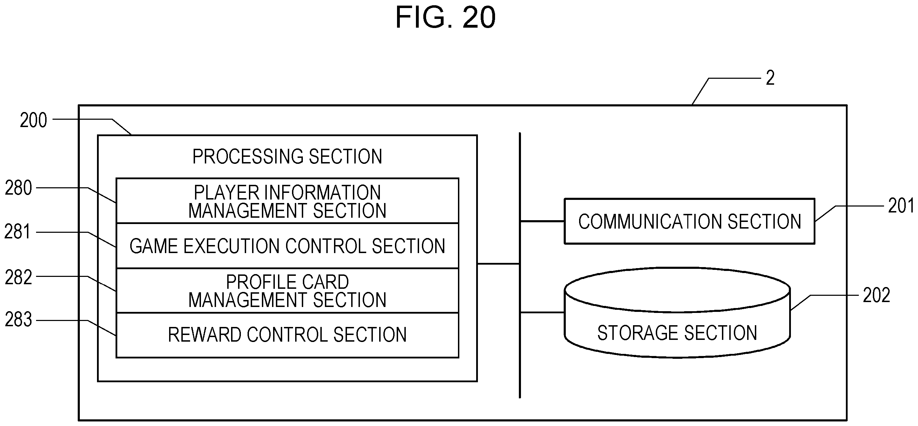

Fig. 20 is a block diagram illustrating an example of the functional configuration of the game server 2. The game server 2 includes a processing section 200, a communication section 201, and a storage section 202.

The processing section 200 comprehensively controls operation of the game server 2 on the basis of the programs and the data stored in the storage section 202, received information, etc. The function of the processing section 200 may be implemented by electronic components such as a microprocessor such as a CPU and a GPU, an ASIC, and an IC memory, for example. The processing section 200 includes the functions of a player information management section 280, a game execution control section 281, a profile card management section 282, and a reward control section 283.

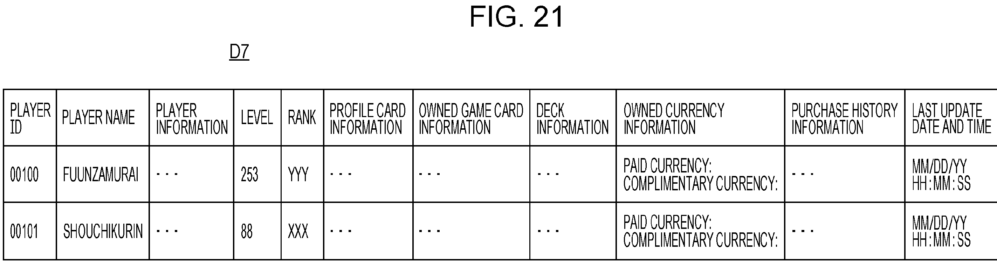

The player information management section 280 manages information on the player using a player information management database D7. Fig. 21 illustrates an example of the player information management database D7. The player information management database D7 has one record for each player, the record being the same as that of the player information database D1.

The player information management section 280 matches the player ID and the last update date and time of the player information database D1 transmitted when the player terminal 1 logs in to the game with the player ID and the last update date and time of the player information management database D7. When the data match each other, the player information management section 280 transmits information indicating that. When the data do not match each other, the player information management section 280 synchronizes the content of the player information database D1 between the player terminal 1 and the game server 2 by transmitting the information registered in the player information management database D7.

The game execution management section 281 matches players, executes battle games, and executes and manages giving of various parameters such as experience points based on the results of the battle games, etc.

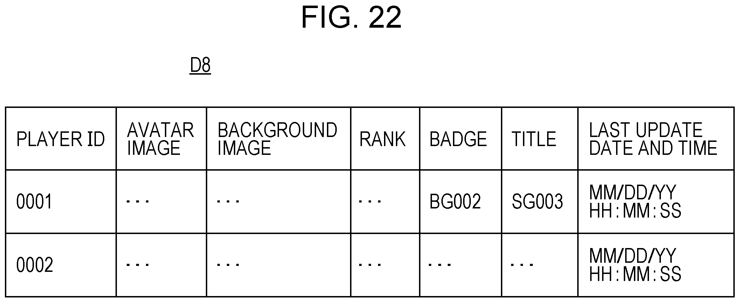

The profile card management section 282 manages various game elements such as game cards to be used in the game using a profile card management database D8. Fig. 22 illustrates an example of the profile card management database D8. The profile card management database D8 stores information similar to that in the game element database D2 stored in each player terminal 1. The profile card management section 282 matches the last update date and time of the profile card information D6 transmitted when the player terminal 1 logs in to the game with the last update date and time of the profile card management database D8. When the data match each other, the profile card management section 282 transmits information indicating that. When the data do not match each other, the profile card management section 282 synchronizes the content by causing the data to match those in the profile card information D6 or the profile card management database D8 with the most recent last update date and time.

The communication section 201 is connected to the communication line N to establish communication.

The storage section 202 stores a system program and a game program. The system program is a program for implementing the basic function of the game server 2 as a computer. The game program is a program for causing the processing section 200 to function as the player information management section 280, the game execution control section 281, the profile card management section 282, and the reward control section 283.

The storage section 202 further stores the player information management database D7 and the profile card management database D8.

### Operation of Devices

Operation of the player terminal 1 and the game server 2 will be described.

When the player starts a game application in the player terminal 1 (S1), the game execution control section 61 transmits the last update date and time of the player ID of the player, the player information database D1, and the profile card information D6 to the game server 2 (S2).

The player information management section 280 of the game server 2 matches the last update date and time of the received player ID with the last update date of the player ID in the player information management database D7 (S3). When the last update dates match each other, the player information management section 280 transmits information indicating that. When the last update dates do not match each other, on the other hand, the player information management section 280 transmits the information stored in the record for the player ID in the player information management database D7 (S4). This allows the player terminal 1 and the game server 2 to synchronize player information.

Similarly, the profile card management section 282 matches the last update date and time of the profile card information D6 with the last update date and time of the profile card management database D8. When the data do not match each other, the contents of the two data are caused to match the content of the data with the most recent update date and time. This allows the player terminal 1 and the game server 2 to synchronize profile card information.

### Operation to Give Reward

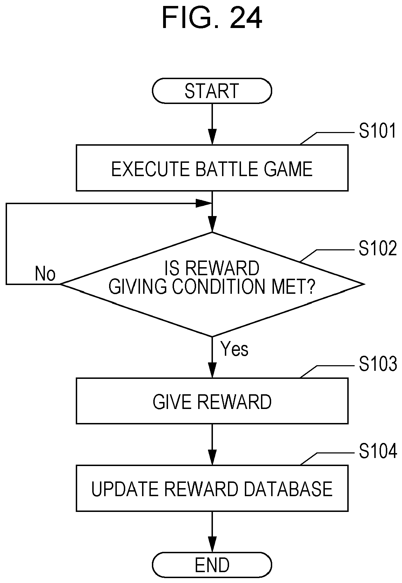

Operation to give a reward will be described. Fig. 24 illustrates operation to give a reward. In the following description, it is assumed that the player has made initial settings of the game and been given a player ID.

The game execution control section 61 starts execution of a battle game (S101).

The reward giving control section 64 checks whether a reward giving condition is met (S102). When a reward giving condition is met (S102: Yes), the reward giving control section 64 gives a reward correlated with the reward giving condition (S103). Further, the reward giving control section 64 writes information indicating that a reward has been given in the giving information of the reward database D4 (S104).

### Operation to Display Profile Information

In the above embodiment, a reward is given by clearing a mission, which makes it possible to keep the player interested in the game.

While a badge selected by the player is displayed on the player screen in the above embodiment, a badge last given may be displayed. With such a configuration, a badge of a higher rank is displayed when a plurality of badges have been given for the same mission, which achieves the effect that the player continuously executes the game in order to display a badge of a higher rank.

### First Different Embodiment

While the title giving control section 63 and the reward giving control section 64 are constituted in the terminal 1 in the above embodiment, the title giving control section 63 and the reward giving control section 64 may be constituted in the server device 2. Also with such a configuration, the same as the above embodiment may be obtained.

### Second Different Embodiment

In the above embodiment, the order of giving rewards for a single mission is determined as follows:
· the first reward to be given is the complimentary currency;
· the last reward to be given is a badge;
· the number of times of giving the complimentary currency is larger than the number of times of giving a badge;
· the complimentary currency may be given successively for each achievement of a reward giving condition; and
· the badges may not be given successively for each achievement of a reward giving condition.

However, this is not limiting.

For example, the order of giving rewards may be random, rather than being set in advance. This enhances the expectation of what reward is to be given, which improves the enjoyability of the game.

The above embodiments do not limit the invention as set forth in the claims, and all combinations of the features described in relation to the embodiments are not always necessary for the invention. Two or more of a plurality of features described in relation to the embodiments may be combined as desired.

Some or all of the above embodiments may be defined as in the following appendices, which are not limiting.
Appendix 1
   A program that causes a computer to function as:
   a battle game execution unit that executes a battle game; and
   a giving unit that gives one of a first-type game element and a second-type game element as a reward for the battle game,
   wherein the giving unit is capable of successively giving the first-type game element, and does not successively give the second-type game element.
Appendix 2
   The program according to Appendix 1,
   wherein the giving unit gives either the first-type game element or the second-type game element each time a result of the battle game meets a predetermined condition.
Appendix 3
   The program according to Appendix 1 or 2,
   wherein the predetermined condition becomes stricter in accordance with progress of the game.
Appendix 4
   The program according to any one of Appendices 1 to 3,
   wherein the giving unit makes a number of times of giving the first-type game element larger than a number of times of giving the second-type game element.
Appendix 5
   The program according to any one of Appendices 1 to 4,
   wherein the first-type game element includes one type of game element, and
   the second-type game element includes a plurality of types of game elements.
Appendix 6
   The program according to any one of Appendices 1 to 5,
   wherein the plurality of types are ranks, and
   the giving unit gives second-type game elements with increasingly higher ranks in accordance with progress of the battle game.
Appendix 7
   The program according to any one of Appendices 1 to 6,
   wherein the giving unit gives the first-type game element as a first game element to be given.
Appendix 8
   The program according to any one of Appendices 1 to 7,
   wherein the giving unit gives the second-type game element as a last game element to be given.
Appendix 9
   The program according to any one of Appendices 1 to 8,
   wherein the giving unit gives a third-type game element that serves as an avatar of a player, and
   the second-type game element varies an appearance of the third-type game element.
Appendix 10
   The program according to any one of Appendices 1 to 9,
   wherein the giving unit gives one third-type game element before giving the first-type game element and the second-type game element.
Appendix 11
   The program according to any one of Appendices 1 to 10,
   wherein the computer is caused to function as a presentation unit that presents the second-type game element and the third-type game element together.
Appendix 12
   The program according to any one of Appendices 1 to 11,
   wherein the presentation unit performs control so as to make it possible to present only the last given second-type game element together with the third-type game element.
Appendix 13
   The program according to any one of Appendices 1 to 12,
   wherein the third-type game element is of a card type.
Appendix 14
   The program according to any one of Appendices 1 to 13,
   wherein the second-type game element is a game element that is not exchangeable with a charge.
Appendix 15
   A game device comprising:
   a battle game execution unit that executes a battle game; and
   a giving unit that gives one of a first-type game element and a second-type game element as a reward for the battle game,
   wherein the giving unit is capable of successively giving the first-type game element, and does not successively give the second-type game element.
Appendix 16
   A program that causes a computer to function as:
   a battle game management unit that manages progress of a battle game of a player; and
   a provision unit that provides one of a first-type game element and a second-type game element as a reward for a result of the progress of the battle game of the player,
   wherein the provision unit is capable of successively providing the first-type game element, and does not successively provide the second-type game element.
Appendix 17
   The program according to Appendix 16,
   wherein the provision unit performs control so as to make it possible to provide either the first-type game element or the second-type game element each time the result of the battle game meets a predetermined condition.
Appendix 18
   The program according to Appendix 16 or 17,
   wherein the predetermined condition becomes stricter in accordance with progress of the game.
Appendix 19
   The program according to any one of Appendices 16 to 18,
   wherein the provision unit makes a number of times of providing the first-type game element larger than a number of times of providing the second-type game element.
Appendix 20
   The program according to any one of Appendices 16 to 19,
   wherein the first-type game element includes one type of game element, and
   the second-type game element includes a plurality of types of game elements.
Appendix 21
   The program according to any one of Appendices 16 to 20,
   wherein the plurality of types are ranks, and
   the giving unit provides second-type game elements with increasingly higher ranks in accordance with the progress of the battle game.
Appendix 22
   The program according to any one of Appendices 16 to 21,
   wherein the provision unit provides the first-type game element as a first game element to be provided.
Appendix 23
   The program according to any one of Appendices 16 to 22,
   wherein the provision unit provides the second-type game element as a last game element to be provided.
Appendix 24
   The program according to any one of Appendices 16 to 23,
   wherein the provision unit provides a third-type game element that serves as an avatar of the player, and
   the second-type game element varies an appearance of the third-type game element.
Appendix 25
   The program according to any one of Appendices 16 to 24,
   wherein the provision unit gives one third-type game element before giving the first-type game element and the second-type game element.
Appendix 26
   The program according to any one of Appendices 16 to 24,
   wherein the third-type game element is of a card type.
Appendix 27
   The program according to any one of Appendices 16 to 26,
   wherein the second-type game element is a game element that is not exchangeable with a charge.
Appendix 28
   A provision management device comprising:
   a battle game management unit that manages progress of a battle game of a player; and
   a provision unit that provides one of a first-type game element and a second-type game element as a reward for a result of the progress of the battle game of the player,
   wherein the provision unit is capable of successively providing the first-type game element, and does not successively provide the second-type game element.

## Claims

1. A computer program product comprising instructions which, when executed by a computer, cause the computer to:
execute a battle game; and
give one of a first-type game element and a second-type game element as a reward for the battle game,
wherein the computer is caused to successively give the first-type game element and not successively give the second-type game element.

2. The computer program product according to Claim 1, further configured to cause the computer to give either the first-type game element or the second-type game element each time a result of the battle game meets a predetermined condition.

3. The computer program product according to Claim 2, wherein the predetermined condition becomes stricter in accordance with progress of the game.

4. The computer program product according to Claim 1 or 2, further configured to cause the computer to make a number of times of giving the first-type game element larger than a number of times of giving the second-type game element.

5. The computer program product according to Claim 4,
wherein the first-type game element includes one type of game element, and
the second-type game element includes a plurality of types of game elements.

6. The computer program product according to Claim 5,
wherein the plurality of types are ranks, and
the computer program product is further configured to cause the computer to give second-type game elements with increasingly higher ranks in accordance with progress of the battle game.

7. The computer program product according to Claim 4, further configured to cause the computer to give the first-type game element as a first game element to be given.

8. The computer program product according to Claim 7, further configured to cause the computer to give the second-type game element as a last game element to be given.

9. The computer program product according to Claim 4, further configured to cause the computer to give a third-type game element that serves as an avatar of a player, and
the second-type game element varies an appearance of the third-type game element.

10. The computer program product according to Claim 9, further configured to cause the computer to give one third-type game element before giving the first-type game element and the second-type game element.

11. The computer program product according to Claim 10, further configured to cause the computer to present the second-type game element and the third-type game element together.

12. The computer program product according to Claim 11, further configured to cause the computer to perform control so as to make it possible to present only the last given second-type game element together with the third-type game element.

13. The computer program product according to Claim 9,
wherein the third-type game element is of a card type.

14. The computer program product according to Claim 1,
wherein the second-type game element is a game element that is not exchangeable with a charge.

15. The computer program product as according to any one of the previous Claims 1-14, further configured to cause the computer to:
manage progress of a battle game of a player; and
provide one of the first-type game element and the second-type game element as a reward for a result of the progress of the battle game of the player.

16. A player terminal (1) configured to:
a execute a battle game; and
give one of a first-type game element and a second-type game element as a reward for the battle game,
wherein the player terminal (1) is capable of successively giving the first-type game element, and does not successively give the second-type game element.

17. The player terminal (1) according to claim 16 and further configured to:
manage progress of a battle game of a player.
